# EUROPEAN PATENT APPLICATION

(11) **EP 4 617 745 A1**
(43) Date of publication of application: **17.09.2025**
(21) Application number: 23909850.2
(22) Date of filing: 27.11.2023
(51) Int. Cl.: G02B 6/42, H04B 10/00, H04J 14/02

(54) **OPTICAL RECEIVING ASSEMBLY, OPTICAL MODULE, OLT, AND PON SYSTEM**

(30) Priority: 30.12.2022 CN 202211729206
(71) Applicant: Huawei Technologies Co., Ltd., Shenzhen, Guangdong 518129 (CN)
(72) Inventor: SHEN, Yu, Shenzhen, Guangdong 518129 (CN); HUANG, Lixin, Shenzhen, Guangdong 518129 (CN); LI, Shu, Shenzhen, Guangdong 518129 (CN)
(74) Representative: Goddar, Heinz J.
(86) International application number: PCT/CN2023/134331
(87) International publication number: WO 2024/139919

(57) **Abstract**

A receiving optical sub-assembly, an optical module, an OLT, and a PON system are provided, to save device deployment space in which a plurality of signals coexist, and implement smooth network upgrading. The receiving optical sub-assembly (2100) includes a first enclosure (2101), a first optical receiver (2121), and a second optical receiver (2122), where a first ingress optical port (2102) and a second ingress optical port (2103) are disposed on the first enclosure (2101); and the first enclosure (2101) is packaged with: a first filter (2111), disposed between the first ingress optical port (2102) and the second ingress optical port (2103), where the first filter (2111) is configured to reflect an optical signal in a first wavelength range and an optical signal in a second wavelength range in a first optical signal that is from the first ingress optical port (2102); a second filter (2112), disposed on a reflection optical path of the first filter (2111), where the second filter (2112) is configured to transparently transmit the optical signal in the first wavelength range and reflect the optical signal in the second wavelength range; a first optical lens group, configured to guide transparently transmitted light of the second filter (2112) to the first optical receiver (2121); and a second optical lens group, configured to guide reflected light of the second filter (2112) to the second optical receiver (2122).

## Description

This application claims priority to Chinese Patent Application No. 202211729206.9, filed with the China National Intellectual Property Administration on December 30, 2022 and entitled "RECEIVING OPTICAL SUB-ASSEMBLY, OPTICAL MODULE, OLT, AND PON SYSTEM", which is incorporated herein by reference in its entirety.

### TECHNICAL FIELD

This application relates to the field of optical communication technologies, and in particular, to a receiving optical sub-assembly, an optical module, an optical line terminal, and a passive optical network system.

### BACKGROUND

With development of society and an upsurge in an amount of information, especially advent of the big data era, a requirement for a broadband access speed is higher. A 100 Mbit/s broadband access service provided by an early gigabit-capable passive optical network (gigabit-capable passive optical network, G-PON) gradually cannot meet a user requirement. Therefore, an operator upgrades the network to a 10G-PON (also referred to as XG-PON) system. Driven by the industry, 50G-PON will become an evolution path of a next-generation PON network. However, because home users do not have urgent requirements for bandwidth upgrade, G-PON and 10G-PON systems still need to continue to provide services for a long time. However, enterprises that have high requirements for network bandwidth may upgrade to the 50G-PON system in the future. In this case, three generations of optical sub-assemblies: G-PON, XG-PON, and 50G-PON may coexist, and a wavelength division multiplexing (wavelength division multiplexing, WDM) module needs to be used to perform upstream/downstream multiplexing and demultiplexing in G-PON, XG-PON and 50G-PON. However, in actual application, multiplexing and demultiplexing are usually implemented by using a method in which a WDM module is externally disposed. This causes high construction costs, large equipment room space occupation, complex construction and cabling, and difficult management and maintenance.

### SUMMARY

Embodiments of this application provide a receiving optical sub-assembly, an optical module, an OLT, and a PON system, to save device deployment space and implement smooth network upgrading.

According to a first aspect, this application provides a receiving optical sub-assembly, used in an optical network system in which a G-PON, an XG-PON, and a 50G-PON coexist, and including a first enclosure, a first optical receiver, and a second optical receiver, where a first ingress optical port and a second ingress optical port are disposed on the first enclosure. The first ingress optical port is specifically an optical fiber connection port, and the receiving optical sub-assembly receives an incoming first optical signal through the optical fiber connection port. The second ingress optical port is connected to a transmitting optical sub-assembly, and the receiving optical sub-assembly receives, through the second ingress optical port, a second optical signal emitted by the transmitting optical sub-assembly, and transmits the second optical signal to an optical fiber through the first ingress optical port.

A first filter, a second filter, a first optical lens group, and a second optical lens group are packaged in the first enclosure.

The first filter is disposed between the first ingress optical port and the second ingress optical port, the first filter is configured to reflect an optical signal in a first wavelength range and an optical signal in a second wavelength range in a first optical signal that is from the first ingress optical port, and the first filter is further configured to transparently transmit, to the first ingress optical port, a second optical signal that is from the second ingress optical port.

The second filter is disposed on a reflection optical path of the first filter, and the second filter is configured to transparently transmit the optical signal in the first wavelength range and reflect the optical signal in the second wavelength range. It is considered that a wavelength range of the 50G-PON is between a wavelength range of the G-PON and a wavelength range of an XG(S)-PON, the first optical signal and the second optical signal are separated by the first filter, so that the two signals can be respectively received by the corresponding receivers without performing another filtering operation subsequently.

The first optical lens group is disposed on a transparent transmission optical path of the second filter, and the first optical lens group is configured to guide transparently transmitted light of the second filter to the first optical receiver. The second optical lens group is disposed on a reflection optical path of the second filter, and the second optical lens group is configured to guide reflected light of the second filter to the second optical receiver. The first optical lens group and the second optical lens group are configured to change corresponding optical path directions to the corresponding optical receivers.

In this embodiment, the first filter is disposed to reflect optical fiber output light of the first ingress optical port and transparently transmit emitted light of the transmitting optical sub-assembly of the second ingress optical port, to separate the received light from the sent light. In addition, the second filter is disposed to perform demultiplexing on the optical fiber output light, to isolate an optical signal in a specified wavelength range for separate receiving. This may be applied to the optical network system in which the three generations of the G-PON, the XG-PON, and the 50G-PON coexist. Specifically, an optical signal corresponding to the 50G-PON may be received by a separate optical receiver, so that the optical signal corresponding to the 50G-PON is received by the first optical receiver, and optical signals of the G-PON and the XG(S)-PON are received by the second optical receiver.

In a possible implementation, an incident angle of the first optical signal on the first filter is a preset angle, and the preset angle is determined based on a wavelength difference between a maximum wavelength of the first optical signal and a minimum wavelength of the second optical signal.

In this embodiment, to enable the first filter to have a maximum optical signal transparent transmission effect and a maximum optical signal reflection effect, and to minimize losses of transparently transmitted light and reflected light, a disposition angle of the first filter may be determined based on a wavelength difference between the first optical signal and the second optical signal.

In a possible implementation, the first optical lens group includes at least one first optical reflector, the first optical reflector is disposed on the transparent transmission optical path of the second filter, and the transparently transmitted light of the second filter is sequentially reflected by each first optical reflector and then enters the first optical receiver.

In this embodiment, the first optical reflector is configured to change a direction of the transparently transmitted light of the second filter, so that the first optical receiver can receive an optical signal with maximum efficiency.

In a possible implementation, the first optical lens group further includes a first filter plate, the first filter plate is disposed on a receiving optical path of the first optical receiver, and the first filter plate is configured to transparently transmit the optical signal in the first wavelength range.

In this embodiment, the first filter plate is configured to further filter the transparently transmitted light of the second filter, to prevent stray light of another wavelength from entering the first optical receiver.

In a possible implementation, a third filter is further packaged in the first enclosure; and
the third filter is disposed on the reflection optical path of the second filter, and is configured to reflect the optical signal in the second wavelength range to the second optical lens group.

In this embodiment, the third filter further reflects light in the second wavelength range. This helps improve isolation of the optical signal in the second wavelength range.

In a possible implementation, a disposition angle of the third filter is consistent with that of the first filter.

In this embodiment, when performance of the third filter is the same as that of the first filter, the third filter is configured for secondary reflection to improve isolation. Therefore, for ease of installation and cooperation with another component, the disposition angle of the third filter may be consistent with that of the first filter.

In a possible implementation, the second optical lens group includes at least one second optical reflector, the second optical reflector is disposed on the reflection optical path of the second filter, and the reflected light of the second filter is sequentially reflected by each second optical reflector and then enters the second optical receiver.

In this embodiment, the second optical reflector is configured to change a direction of the reflected light of the second filter, so that the second optical receiver can receive an optical signal with maximum efficiency.

In a possible implementation, the at least one second optical reflector includes a fourth filter, and the fourth filter is configured to transparently transmit the optical signal in the first wavelength range and reflect the optical signal in the second wavelength range.

In this embodiment, the optical signal in the first wavelength range is further filtered, to reduce stray light in the optical signal that enters the second optical receiver.

In a possible implementation, a third optical lens group and a third optical receiver are further packaged in the first enclosure;
the first filter is further configured to transparently transmit an optical signal in a third wavelength range in the first optical signal; and
the third optical lens group is disposed on an optical path of the first optical signal that is transparently transmitted by the first filter, and the third optical lens group is configured to guide the optical signal in the third wavelength range to the third optical receiver.

In a possible implementation, a fifth filter, a third optical lens group, and a third optical receiver are further packaged in the first enclosure;
the first filter is further configured to reflect an optical signal in a third wavelength range in the first optical signal to the second filter;
the second filter is further configured to reflect the optical signal in the third wavelength range;
the fifth filter is disposed on an optical path between the second filter and the second optical lens group, and the fifth filter is configured to transparently transmit the optical signal in the third wavelength range and reflect the optical signal in the second wavelength range to the second optical lens group; and
the third optical lens group is disposed on a transparent transmission optical path of the fifth filter, and the third optical lens group is configured to guide transparently transmitted light of the fifth filter to the third optical receiver.

In the foregoing two embodiments, demultiplexing is performed on the optical signals in the three wavelength ranges and the optical signals are separately received. This may be applied to a scenario in which optical sub-assemblies of three generations of the G-PON, the XG-PON, and the 50G-PON coexist. A user may need to replace a user-side ONU terminal, and service selection is more flexible.

In a possible implementation, a parallelogram transparent substrate is further packaged in the first enclosure; and
the first filter, the second filter, and the transparent substrate form a z-block demultiplexer.

In a possible implementation, an irregular-shaped prism is further packaged in the first enclosure; and
the first filter and the second filter are disposed on an edge of the irregular-shaped prism.

In a possible implementation, the first wavelength range is 1284 nm to 1288 nm.

According to a second aspect, this application provides an optical module, including a transmitting optical sub-assembly and the receiving optical sub-assembly according to the first aspect, where
the transmitting optical sub-assembly includes a second enclosure, a first egress optical port is disposed on the second enclosure, and the first egress optical port is connected to a second ingress optical port of the receiving optical sub-assembly.

In a possible implementation, a first optical transmitter, a second optical transmitter, and a first multiplexer are packaged in the second enclosure; and
the first multiplexer is disposed on an emission optical path of the first optical transmitter and an emission optical path of the second optical transmitter, and the first multiplexer is configured to guide, to the first egress optical port, a first multiplexed signal emitted by the first optical transmitter and the second optical transmitter.

In a possible implementation, a third optical transmitter and a second multiplexer are further packaged in the second enclosure; and
the second multiplexer is disposed on an emission optical path of the first multiplexed signal and an emission optical path of the third optical transmitter, and the second multiplexer is configured to guide, to the first egress optical port, a second multiplexed signal of the first optical transmitter, the second optical transmitter, and the third optical transmitter.

In a possible implementation, a first collimating lens and a second collimating lens are further packaged in the second enclosure;
the first multiplexer is directly coupled to the first optical transmitter and the second optical transmitter by using a planar lightwave circuit technology; and
the first collimating lens is disposed on the optical path of the first multiplexed signal, and the second collimating lens is disposed on the emission optical path of the third optical transmitter.

In a possible implementation, a first collimating lens, a second collimating lens, and a third collimating lens are further packaged in the second enclosure;
the first collimating lens is disposed on the emission optical path of the first optical transmitter;
the second collimating lens is disposed on the emission optical path of the second optical transmitter; and
the third collimating lens is disposed on the emission optical path of the third optical transmitter.

In a possible implementation, a third optical transmitter is further packaged in the second enclosure; and
the first multiplexer is further disposed on an emission optical path of the third optical transmitter, and the first multiplexer is specifically configured to guide, to the first egress optical port, a second multiplexed signal of the first optical transmitter, the second optical transmitter, and the third optical transmitter.

According to a third aspect, this application provides an optical line terminal, including the optical module in any one of possible implementations of the second aspect.

According to a fourth aspect, this application provides a passive optical network system, including the optical line terminal in the third aspect, an optical distribution network, and a plurality of optical network units, where
the optical distribution network is connected to the optical line terminal; and the optical network unit is connected to the optical distribution network.

In a possible implementation, the plurality of optical network units include a network unit corresponding to a G-PON optical module, a network unit corresponding to an XG-PON optical module, and a network unit corresponding to a 50G-PON optical module.

The solutions provided in the second aspect to the sixth aspect are used to implement or cooperate to implement the transmitting optical sub-assembly provided in the first aspect, and therefore, can achieve beneficial effects the same as or corresponding to those in the first aspect. Details are not described herein again.

### BRIEF DESCRIPTION OF DRAWINGS

FIG. 1 is a diagram of a networking structure of a typical passive optical network system when a WDM module is externally disposed;
FIG. 2 is a diagram of a structure of an optical module according to a first embodiment of this application;
FIG. 3 is a diagram of a structure of an optical module according to a second embodiment of this application;
FIG. 4 is a diagram of a structure of an optical module according to a third embodiment of this application;
FIG. 5 is a diagram of a structure of an optical module according to a fourth embodiment of this application;
FIG. 6 is a diagram of a structure of an optical module according to a fifth embodiment of this application;
FIG. 7 is a diagram of a structure of an optical module according to a sixth embodiment of this application;
FIG. 8 is a diagram of a structure of an optical module according to a seventh embodiment of this application; and
FIG. 9 is a diagram of a structure of a passive optical network system according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that data used in such a way are interchangeable in proper circumstances, so that the embodiments described herein can be implemented in other orders than the order illustrated or described herein. In addition, terms "include" and "have" and any variations thereof are intended to cover non-exclusive inclusions, for example, a process, method, system, product, or device including a series of steps or modules is not necessarily limited to those clearly listed steps or modules, but may include other steps or modules that are not clearly listed or are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on an actual requirement to achieve the objective of the solutions of this application.

Embodiments of this application relate to a receiving optical sub-assembly, a transmitting optical sub-assembly, an optical module, an optical line terminal, and a passive optical network system. The following briefly describes the foregoing related concepts.

Passive optical network (passive optical network, PON): In the passive optical network, an optical distribution network (optical distribution network, ODN) is between an optical line terminal (optical line terminal, OLT) and an optical network unit (optical network unit, ONU), and there is no active electronic device.

The ODN is a fiber-to-the-home cable network based on a PON device, and is used to provide an optical transmission channel between the OLT and the ONU.

Wavelength division multiplexing (wavelength division multiplexing, WDM): The WDM is a technology in which two or more optical carrier signals (carrying various types of information) of different wavelengths are combined at a transmit end through a multiplexer (also referred to as a multiplexer), and coupled to a same optical fiber of an optical line for transmission; and optical carriers of various wavelengths are separated at a receive end through a demultiplexer (also referred to as a demultiplexer or a de-multiplexer), and then processed by an optical receiver to restore original signals. This technology for simultaneous transmission of two or more optical signals of different wavelengths in a same optical fiber is referred to as wavelength division multiplexing.

Optical transmission module: is referred to as an optical module for short, and includes a bi-directional optical sub-assembly (bi-directional optical sub-assembly, BOSA) and an electrical sub-assembly (electrical sub-assembly, ESA). A pin of a bi-directional optical sub-assembly and a peripheral electrical sub-assembly (ESA) are electrically connected, and then packaged into an optical module enclosure, to form an optical transmission module.

The bi-directional optical sub-assembly (bi-directional optical sub-assembly, BOSA) mainly includes a transmitting optical sub-assembly (transmitting optical sub-assembly, TOSA) and a receiving optical sub-assembly (receiving optical sub-assembly, ROSA).

Transmitting optical sub-assembly (transmitting optical sub-assembly, TOSA): Functions of the TOSA are to convert an electrical signal into an optical signal and input the optical signal into an optical fiber for transmission.

Receiving optical sub-assembly (receiving optical sub-assembly, ROSA): Functions of the ROSA are to receive an optical signal from an optical fiber and convert the optical signal into an electrical signal.

An optical module that can support any two different transmission rates may be referred to as a combo (combo) optical module. For example, a current common combo optical module is compatible with an existing G-PON network service and provides an XG-PON or XGS-PON high-bandwidth service on demand. Reusing an existing network device and an ODN can avoid a change to a live network resource and extra equipment room space occupation, and replacing a user-side ONU terminal on demand based on service package upgrading can implement fast and smooth upgrading of a high-bandwidth service.

In recent years, access broadband services have been booming. High-bandwidth services such as 4K televisions, 3D games, high-definition videos, and live interaction have been developing rapidly. In addition, driven by fierce market competition and national broadband policies, broadband operators have accelerated construction and deployment of access broadband networks. Currently, it is gradually difficult for mainstream G-PON networks to meet bandwidth requirements of increasing high-bandwidth services. Operators need to consider new technologies to provide higher bandwidth and better services, improve user experience, and create new value points. A current mature commercial XG-PON technology can meet this requirement and resolve a contradiction between service development and bandwidth insufficiency. In addition, driven by the industry, 50G-PON will become an evolution path of a next-generation PON network. However, because home users do not have urgent requirements for bandwidth upgrade, G-PON and 10G-PON systems still need to continue to provide services for a long time. However, enterprises that have high requirements for network bandwidth may upgrade to the 50G-PON system in the future. In this case, three generations of optical sub-assemblies: G-PON, XG-PON, and 50G-PON may coexist.

In terms of use of wavelengths of optical signals, an optical line terminal in the G-PON performs sending by using a wavelength in 1480 nm to 1500 nm and performs receiving by using a wavelength in 1300 nm to 1330 nm, an optical line terminal in the XG(S)-PON performs sending by using a wavelength in 1575 nm to 1580 nm and performs receiving by using a wavelength in 1260 nm to 1280 nm, and an optical line terminal in the 50G-PON performs sending by using a wavelength in 1340 nm to 1344 nm and performs receiving by using a wavelength in 1284 nm to 1288 nm. The G-PON and XG(S)-PON OLTs are legacy PON (legacy PON) OLTs. Therefore, in a combined bi-directional sub-assembly, optical signals of legacy PON and 50G-PON wavelengths need to be received and sent, and coexist in a particular structure design. In this case, a series of WDM modules (multiplexers or demultiplexers) need to combine and separate light of the two wavelengths.

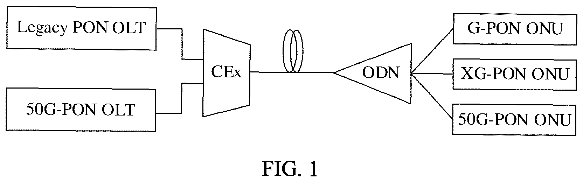

Currently, a method in which a WDM module is externally disposed is usually used to add a 50G-PON line card to an optical communication system. FIG. 1 is a diagram of a networking structure when a WDM module is externally disposed.

Based on a combo optical module and a line card in a legacy PON OLT (legacy PON OLT), for an optical module in a 50G-PON OLT, an external coexistence (coexistence, CEx) WDM is used to implement coexistence with a G-PON and an XG(S)-PON, and an optical splitter is used to distribute three channels of different light to corresponding ONUs (including a G-PON ONU, an XG-PON ONU, and a 50G-PON ONU).

In the external multiplexer solution, auxiliary devices such as OLT subracks, racks, 10G-PON line cards, external multiplexers, fiber patch cords, and ODFs need to be added. Construction costs are high, equipment room space occupation is large, construction and cabling are complex, and management and maintenance are difficult. When G-PON and 10G-PON services are deployed on large scale on a live network, an optical power budget of some areas and some users is limited. If the external multiplexer is used, at least 1-dB insertion loss will be introduced. An optical power loss introduced by an external multiplexer also affects an optical power budget of ONUs on the live network, and there is a risk of affecting user services.

To resolve the foregoing problem, embodiments of this application provide an optical module. The optical module is a combo optical module, and may be used in an optical network system in which three generations of a G-PON, an XG-PON, and a 50G-PON coexist. The optical module includes a transmitting optical sub-assembly and a receiving optical sub-assembly.

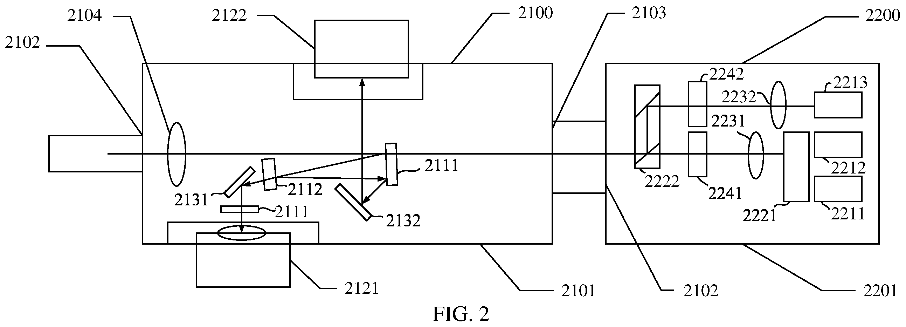

FIG. 2 is a diagram of a structure of an optical module according to a first embodiment of this application. The optical module includes a receiving optical sub-assembly 2100 and a transmitting optical sub-assembly 2200. A function of the transmitting optical sub-assembly 2200 is to convert an electrical signal into an optical signal, and input the optical signal into an optical fiber for transmission. A function of the receiving optical sub-assembly 2100 is to receive an optical signal from the optical fiber, and convert the optical signal into an electrical signal.

The receiving optical sub-assembly 2100 includes a first enclosure 2101, a first optical receiver 2121, and a second optical receiver 2122. A first ingress optical port 2102 and a second ingress optical port 2103 are disposed on the first enclosure. The first ingress optical port 2102 is specifically an optical fiber connection port, and the receiving optical sub-assembly 2100 receives an incoming first optical signal through the optical fiber connection port. The second ingress optical port 2103 is connected to the transmitting optical sub-assembly 2200, and the receiving optical sub-assembly 2100 receives, through the second ingress optical port 2103, a second optical signal emitted by the transmitting optical sub-assembly, and transmits the second optical signal to the optical fiber through the first ingress optical port 2102.

A first filter 2111, a second filter 2112, a first optical lens group, and a second optical lens group are packaged in the first enclosure 2101.

The first filter 2111 is disposed on an optical path of the first optical signal and an optical path of the second optical signal, and the first optical signal is optical fiber output light. Optionally, a collimating lens 2104 may be disposed at the first ingress optical port 2102, and the collimating lens 2104 is configured to calibrate the first optical signal to parallel light. It may be understood that, the optical module in this embodiment may be used in an optical network system in which a G-PON, an XG(S)-PON, and a 50G-PON coexist. For example, in a possible case, an original optical network system can implement requirements of sending and receiving optical signals of the G-PON and the XG(S)-PON, and there is a corresponding optical receiver to receive optical signals of the two types of wavelengths. When an optical signal of the 50G-PON is introduced, an optical receiver corresponding to the optical signal of the 50G-PON needs to be added, in other words, the G-PON and the XG(S)-PON share one optical receiver, and the 50G-PON uses one optical receiver. A wavelength range (1284 nm to 1288 nm) of an optical signal of the 50G-PON may be defined as a first wavelength range, and a wavelength range (1300 nm to 1330 nm) of an optical signal of the G-PON and a wavelength range (1260 nm to 1280 nm) of an optical signal of the XG(S)-PON may be defined as a second wavelength range, in other words, optical signals in the first wavelength range and the second wavelength range may exist in the first optical signal. It should be noted that, in this case, light in the second wavelength range includes two wavelength ranges.

The first filter 2111 is configured to reflect the optical signals in the first wavelength range and the second wavelength range to the second filter 2112, and is further configured to transparently transmit the second optical signal to the first ingress optical port 2102. It may be understood that, because wavelength ranges of the first optical signal and the second optical signal are different, to facilitate subsequent sending of different optical signals in the first optical signal to corresponding optical receivers, optical paths of optical signals in corresponding wavelength ranges in the first optical signal first need to be changed through the first filter, in other words, the optical signals in the first wavelength range and the second wavelength range are reflected.

It may be understood that, to implement a case in which the G-PON and the XG(S)-PON share one optical receiver, and the 50G-PON uses one optical receiver, filtering needs to be performed based on a wavelength range of each signal. It is known that the wavelength range (1284 nm to 1288 nm) of the optical signal of the 50G-PON is between the wavelength range (1300 nm to 1330 nm) of the optical signal of the G-PON and the wavelength range (1260 nm to 1280 nm) of the optical signal of the XG(S)-PON. If the optical signal of the 50G-PON is directly filtered at the first filter 2111, the optical signals of G-PON and the XG(S)-PON further need to be separated subsequently from the second optical signal, and the optical signals of the G-PON and the XG(S)-PON may further need to be split. As a result, the optical signals of the G-PON and the XG(S)-PON cannot be received by a same optical receiver. Therefore, the first optical signal and the second optical signal are first separated by the first filter, so that after the optical signal of the 50G-PON is subsequently filtered, the G-PON and the XG(S)-PON may be guided to a same optical receiver directly by changing an optical path direction without a need of performing a filtering operation.

Preferably, the first optical signal is incident to the first filter at a small incident angle. Because there is a wavelength difference between a received signal and a sent signal of the optical module, namely, a wavelength difference between a maximum wavelength of the first optical signal and a minimum wavelength of the second optical signal, to enable the first filter to have maximum optical signal transparent transmission effect and reflection effect, and make losses of transparently transmitted light and reflected light as small as possible, an experiment proves that filtering and reflection effects of the first filter are related to the incident angle of the optical signal, and a value of the incident angle is related to the wavelength difference between the transparently transmitted optical signal and the reflected optical signal. In this embodiment, it is considered that a maximum wavelength of the first optical signal is 1330 nm, a minimum wavelength of the second optical signal is 1340 nm, and a wavelength difference between the maximum wavelength and the minimum wavelength is 14 nm. An experimental test shows that good transparent transmission and reflection effects can be achieved by controlling the incident angle to approximately 8°. Certainly, in an actual application, the incident angle may alternatively be correspondingly set based on different optical signal wavelength ranges. This embodiment only provides a possible implementation, and is not limited thereto.

The second filter 2112 is disposed on a reflection optical path of the first filter 2111, and is configured to transparently transmit the optical signal in the first wavelength range and reflect the optical signal in the second wavelength range. It may be understood that a function of the second filter 2112 is demultiplexing. In this embodiment, the second filter 2112 is configured to transparently transmit an optical signal in the wavelength range (1284 nm to 1288 nm) corresponding to the 50G-PON and reflect an optical signal that does not belong to the wavelength range, namely, optical signals in the second wavelength range corresponding to the G-PON (1300 nm to 1330 nm) and the XG(S)-PON (1260 nm to 1280 nm).

The first optical lens group is disposed on a transparent transmission optical path of the second filter 2112, and the first optical lens group is configured to guide transparently transmitted light of the second filter 2112 to the first optical receiver 2121. It may be understood that, because the transparently transmitted light of the second filter 2112 is an optical signal in the first wavelength range, the first optical receiver 2121 is configured to receive the optical signal in the first wavelength range. In this embodiment, the first optical receiver 2121 is configured to receive the optical signal corresponding to the 50G-PON (1284 nm to 1288 nm). The first optical lens group is specifically configured to change an optical path of the optical signal in the first wavelength range, and guide the optical signal to the first optical receiver 2121. Therefore, the first optical lens group may include several optical reflectors, for example, include a first reflective mirror 2131. The first reflective mirror 2131 is disposed on the transparent transmission optical path of the second filter 2112, and is configured to reflect the transparently transmitted light (namely, the optical signal in the first wavelength range) of the second filter 2112 to the first optical receiver 2121.

Further, the first optical lens group further includes a first filter plate 2141. The first filter plate 2141 is disposed on a receiving optical path of the first optical receiver 2121. The first filter plate 2141 may be specifically a 0-degree filter plate, configured to transparently transmit the optical signal in the first wavelength range, to further filter transparent transmission of the second filter 2112, so as to prevent stray light of another wavelength from entering the first optical receiver 2121.

The second optical lens group is disposed on a reflection optical path of the second filter 2112, and the second optical lens group is configured to guide reflected light of the second filter to the second optical receiver 2122. Similar to the first optical receiver 2121, the second optical receiver 2122 is configured to receive the optical signal in the second wavelength range. In this embodiment, the second optical receiver 2122 is configured to receive the optical signals corresponding to the G-PON (1300 to 1330) and the XG(S)-PON (1260 nm to 1280 nm). Similarly, the second optical lens group is configured to change an optical path of the optical signal in the second wavelength range, and guide the optical signal to the second optical receiver 2122, and may also include several optical reflectors, for example, include a second reflector 2132. A function of the second optical lens group is similar to that of the first optical lens group. Details are not described herein again.

It may be understood that, in this embodiment, the second optical receiver 2122 is configured to receive the optical signals corresponding to the G-PON (1300 nm to 1330 nm) and the XG(S)-PON (1260 nm to 1280 nm). Because wavelength ranges corresponding to the two types of signals are not continuous, in this case, a 0-degree filter plate is not suitable to be disposed on a receiving optical path of the second optical receiver 2122. In a possible implementation method, this embodiment of this application further provides a method for improving isolation of the optical signal in the second wavelength range. A third filter is further packaged in the first enclosure 2101. The third filter is disposed on the reflection optical path of the second filter 2112, and is configured to reflect light in the second wavelength range to the second optical lens group. It may be understood that the third filter may have same performance as the first filter, and is configured to perform secondary reflection to improve isolation. Therefore, a disposition angle of the third filter is consistent with that of the first filter. In a possible implementation method, for the light in the second wavelength range, both the first filter 2111 and the third filter may be configured to filter light outside the second wavelength range. For example, the first filter 2111 is configured to transparently transmit an optical signal whose wavelength range is greater than 1330 nm, and the third filter is configured to transparently transmit an optical signal whose wavelength range is less than 1260 nm. Alternatively, each of the first filter 2111 and the third filter is configured to transparently transmit an optical signal whose wavelength range is greater than 1330 nm. In this case, for ease of installation and cooperation with another component, the disposition angle of the third filter may be consistent with that of the first filter 2111, or the first filter 2111 and the third filter may be disposed in an integrated manner as shown in FIG. 2.

It should be understood that the receiving optical sub-assembly provided in this embodiment of this application may be further used in another scenario. For example, in a scenario in which the XG(S)-PON and the 50G-PON coexist, the first wavelength range corresponds to the 50G-PON, and the second wavelength range corresponds to only the XG(S)-PON; or the first wavelength range corresponds to the XG(S)-PON, and the second wavelength range corresponds to only the 50G-PON. In a scenario in which the G-PON and the XG(S)-PON coexist, the first wavelength range corresponds to the XG(S)-PON, and the second wavelength range corresponds to only the G-PON; or the first wavelength range corresponds to the G-PON, and the second wavelength range corresponds to only the XG(S)-PON. In this case, the second optical lens group may include a second filter plate, and the second filter plate is disposed on the receiving optical path of the second optical receiver 2122, and is configured to transparently transmit the optical signal in the second wavelength range.

The first optical receiver 2121 and the second optical receiver 2122 may be disposed at a plurality of positions. For example, if the first optical receiver 2121 and the second optical receiver 2122 are packaged in the first enclosure, the first optical receiver 2121 and the second optical receiver 2122 may be disposed in parallel and side by side, disposed perpendicularly to each other, or disposed at a specific angle. If the first optical receiver 2121 and the second optical receiver 2122 are disposed outside the first enclosure, to be specific, a first egress optical port and a second egress optical port are disposed on the first enclosure, the first optical receiver 2121 receives an optical signal through the first egress optical port, and the second optical receiver 2122 receives an optical signal through the second egress optical port. Similarly, the first optical receiver 2121 and the second optical receiver 2122 that are disposed outside the first enclosure may also be disposed in parallel and side by side, disposed perpendicularly to each other, or disposed at a specific angle. This is not limited in this application.

According to the receiving optical sub-assembly provided in this embodiment of this application, the first filter is disposed to reflect optical fiber output light of the first ingress optical port and transparently transmit emitted light of the transmitting optical sub-assembly of the second ingress optical port, to separate the received light from the sent light. In addition, the second filter is disposed to perform demultiplexing on the optical fiber output light, to isolate an optical signal in a specified wavelength range for separate receiving. This may be applied to the optical network system in which the three generations of the G-PON, the XG-PON, and the 50G-PON coexist. Specifically, an optical signal corresponding to the 50G-PON may be received by a separate optical receiver, so that the optical signal corresponding to the 50G-PON is received by the first optical receiver, and optical signals of the G-PON and the XG(S)-PON are received by the second optical receiver. In comparison with a legacy external CEx WDM manner, the receiving optical sub-assembly provided in this embodiment saves device deployment space, avoids a change to a live network resource and extra equipment room space occupation, and a user may replace a user-side ONU terminal as needed based on service package updating, to implement fast and smooth upgrading of a high-bandwidth service.

The transmitting optical sub-assembly 2200 includes a second enclosure 2201. A first egress optical port 2202 is disposed on the second enclosure 2201, and the first egress optical port 2202 is connected to the second ingress optical port 2103 of the receiving optical sub-assembly.

A first optical transmitter 2211, a second optical transmitter 2212, and a first multiplexer 2221 are packaged in the second enclosure 2201. The first multiplexer 2221 is disposed on an emission optical path of the first optical transmitter 2211 and an emission optical path the second optical transmitter 2212, and the first multiplexer 2221 is configured to guide, to the first egress optical port 2202, a first multiplexed signal emitted by the first optical transmitter 2211 and the second optical transmitter 2212.

It may be understood that, the foregoing method is applicable to a case in which the transmitting optical sub-assembly sends optical signals in two wavelength ranges. For example, the method may be applied to a scenario in which the XG(S)-PON and the 50G-PON coexist: The first optical transmitter sends an optical signal corresponding to the 50G-PON, and the second optical transmitter sends an optical signal corresponding to the XG(S)-PON; or the first optical transmitter sends an optical signal corresponding to the XG(S)-PON, and the second optical transmitter sends an optical signal corresponding to the 50G-PON. In a scenario in which the G-PON and the XG(S)-PON coexist, the first optical transmitter sends an optical signal corresponding to the XG(S)-PON, and the second optical transmitter sends an optical signal corresponding to the G-PON; or the first optical transmitter sends an optical signal corresponding to the G-PON, and the second optical transmitter sends an optical signal corresponding to the XG(S)-PON.

In the optical network system in which the three generations of the G-PON, the XG-PON, and the 50G-PON coexist, a third optical transmitter 2213 is further included.

In a possible implementation, the third optical transmitter 2213 and a second multiplexer 2222 are further packaged in the second enclosure 2201. The second multiplexer 2222 is disposed on an emission optical path of the first multiplexed signal and an emission optical path of the third optical transmitter 2213, and the second multiplexer 2222 is configured to guide, to the first egress optical port, a second multiplexed signal of the first optical transmitter 2211, the second optical transmitter 2212, and the third optical transmitter 2213. It may be understood that the second multiplexed signal includes the first multiplexed signal and emitted light of the third optical transmitter 2213. The two multiplexers are disposed, so that multiplexing may be performed on emitted light of the three optical transmitters to obtain one multiplexed signal for outputting.

Further, a first collimating lens 2231 and a second collimating lens 2232 are further packaged in the second enclosure 2201. The first multiplexer 2221 is directly coupled to the first optical transmitter 2211 and the second optical transmitter 2212 by using a planar lightwave circuit technology. The first collimating lens 2231 is disposed on the optical path of the first multiplexed signal. The second collimating lens 2232 is disposed on the emission optical path of the third optical transmitter.

It may be understood that a collimating lens may be configured to collimate converging light emitted by an optical transmitter into parallel light, to prolong an optical signal transmission distance and improve optical signal transmission efficiency. In this embodiment, the first multiplexer 2221 is directly coupled to the first optical transmitter 2211 and the second optical transmitter 2212 by using the planar lightwave circuit technology. For example, a two-port multiplexing chip of a planar lightwave circuit (planar lightwave circuit, PLC) is used for the first multiplexer 2221, and the first optical transmitter 2211 and the second optical transmitter 2212 are directly coupled to an end face of the PLC by using a photonic wire bonding (photonic wire bonding) technology. In this case, only two collimating lenses are needed, the first collimating lens 2231 is disposed on the multiplexed optical path of the first multiplexer and is configured to collimate the first multiplexed signal, and the second collimating lens 2232 is disposed on the emission optical path of the third optical transmitter and is configured to collimate the emitted light of the third optical transmitter.

Optionally, a first isolator 2241 and a second isolator 2242 are respectively disposed on the emission optical path of the first multiplexed signal and the emission optical path of the third optical transmitter, and are configured to block an input signal and an output signal. In a specific scenario, the first optical transmitter is configured to emit an optical signal corresponding to the G-PON (1480 nm to 1500 nm), the second optical transmitter is configured to emit an optical signal corresponding to the 10G-PON (1575 nm to 1580 nm), and the third optical transmitter is configured to emit an optical signal corresponding to the 50G-PON (1340 nm to 1344 nm). The second isolator 2242 is designed for a wavelength corresponding to the 50G PON, and the G-PON and the XG(S) -PON share the first isolator 2241.

According to the transmitting optical sub-assembly in this embodiment of this application, multiplexing is performed on emitted light of two optical transmitters or three optical transmitters in the second enclosure 2201, and an embedded multiplexing function is integrated in the optical module. In comparison with a legacy external CEx WDM manner, this saves device deployment space, avoids a change to a live network resource and extra equipment room space occupation, and a user can replace a user-side ONU terminal as needed based on service package updating, to implement fast and smooth upgrading of a high-bandwidth service.

The following provides a specific design solution of the receiving optical sub-assembly corresponding to this embodiment. It should be noted that an angle in the specific design solution is an incident angle of an optical signal on a corresponding component.
(1) In a wavelength division solution, spatial filter plates are staggered to form a multiplexing/demultiplexing channel. Optical fiber output light passes through the collimating lens 2104 to form parallel light, is incident to a small-angle (for example, 8°) first filter plate (namely, the first filter 2111, which transparently transmits a wavelength at a transmit end and reflects a wavelength at a receive end), and is reflected to a second filter (namely, the second filter 2112, for example, with an angle of 8°), and an optical signal corresponding to a wavelength of the 50G-PON (1284 nm to 1288 nm) is transparently transmitted from the second filter 2112, is perpendicularly incident to the first optical receiver 2121 through the first reflective mirror 2131 (for example, with an angle of 53°). To prevent impact of stray light of another wavelength, a 0-degree filter plate may be selectively used on the receiving optical path of the first optical receiver 2121 for isolation.
(2) Optical signals corresponding to wavelengths of the G-PON (1300 nm to 1330 nm) and the XG(S)-PON (1260 nm to 1280 nm) are reflected to the first filter plate through the second filter plate (the first filter plate may be shared or another filter plate may be used). To ensure isolation of the optical signal corresponding to the wavelength of the 50G-PON, reflection needs to be performed once again. Light is reflected to the second reflective mirror through the first filter plate, and the reflected light is perpendicularly incident to the second optical receiver 2122 through the second reflective mirror (for example, with an angle of 37°). Preferably, use of the 0-degree filter plate is reduced. Alternatively, to prevent impact of stray light of another wavelength, the 0-degree filter plate may be selectively used on the receiving optical path of the second optical receiver 2122 for isolation.

The following provides a specific design solution of the transmitting optical sub-assembly corresponding to this embodiment.
(1) The first multiplexer 2221 first performs multiplexing on a G-PON (1480 nm to 1500 nm) optical signal emitted by a first laser (namely, the first optical transmitter 2211) and a 10G-PON (1575 nm to 1580 nm) optical signal emitted by a second laser (namely, the second optical transmitter 2212), to obtain the first multiplexed signal.
(2) A 50G-PON (1340 nm to 1344 nm) optical signal emitted by a third laser (namely, the third optical transmitter 2213) and the first multiplexed signal respectively pass through corresponding collimating lenses and isolators, and are output through a same optical path after entering the second multiplexer 2222.

It may be understood that a signal optical path output by the transmitting optical sub-assembly enters the optical fiber after being transparently transmitted by the first filter 2111.

In a possible implementation, before components such as the filter, the optical reflector, the collimating lens, the filter plate, the multiplexer, and the isolator in the transmitting optical sub-assembly and the receiving optical sub-assembly are installed, to facilitate determining of an initial coupling position of each component, a gold-plated identification point may be set at a corresponding position of the first enclosure and/or the second enclosure for high-precision passive mounting; or an active coupling mounting manner is used to ensure that an angle tolerance meets a requirement.

It may be understood that, in embodiments of this application, the filter is an optical instrument or lens having a filtering or optical splitting function, for example, a filter plate or a beam splitter prism. The optical reflector is an optical instrument or lens having a function of changing a direction of an optical path, for example, a reflective mirror. The multiplexer is a device, for example, a multiplexing prism or a polarization multiplexing prism, having a function of multiplexing optical signals of a plurality of wavelengths into a compound optical signal. The optical transmitter is a device, for example, a laser, that transmits an optical signal of a corresponding wavelength.

It may be understood that, the optical module further includes a peripheral electrical sub-assembly, and pins of the receiving optical sub-assembly and the transmitting optical sub-assembly are electrically connected to the peripheral electrical sub-assembly. Specifically, a radio frequency (radio frequency, RF) of the second enclosure may be fanned out by using a flexible circuit board (flexible printed circuit, FPC) or may be directly output by using a low-cost pin to reduce a length size of the entire sub-assembly.

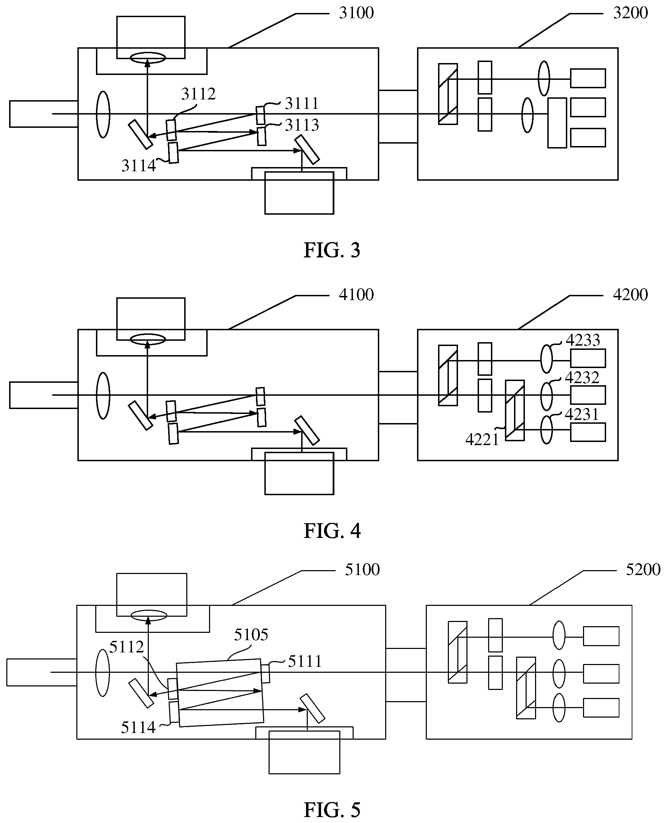

FIG. 3 is a diagram of a structure of an optical module according to a second embodiment of this application. It may be understood that the optical module provided in the second embodiment and the optical module provided in the first embodiment have components with same functions. Details about this type of component are not described again. The following describes only components that are different from those in the first embodiment.

In this embodiment, the optical module includes a receiving optical sub-assembly 3100 and a transmitting optical sub-assembly 3200. A first filter 3111, a second filter 3112, a third filter 3113, and a fourth filter 3114 are packaged in a first enclosure of the receiving optical sub-assembly. The first filter 3111, the second filter 3112, and the third filter 3113 are the same as those in the first embodiment, and the fourth filter 3114 belongs to a second optical reflector in a second optical lens group.

A function of the fourth filter 3114 is similar to that of the second filter 3112, and is configured to transparently transmit an optical signal in a first wavelength range and reflect an optical signal in a second wavelength range. The fourth filter 3114 is configured to further filter the optical signal in the first wavelength range, to reduce stray light in the optical signal entering a second optical receiver.

The following provides a specific design solution of the receiving optical sub-assembly corresponding to this embodiment.

A difference between this embodiment and the first embodiment lies in that the following design manner may be used for the receiving optical sub-assembly:

The receiving optical sub-assembly is designed as follows:
(1) In a wavelength division solution, spatial filter plates are staggered to form a multiplexing/demultiplexing channel. Optical fiber output light passes through a collimating lens to form parallel light, is incident to a small-angle (for example, 8°) first filter plate (namely, the first filter 3111), and is reflected to a second filter (namely, the second filter 3112, for example, with an angle of 8°), and an optical signal corresponding to a wavelength of a 50G-PON (1284 nm to 1288 nm) is transparently transmitted from the second filter 3112, is incident to a first optical receiver through a first reflective mirror (for example, with an angle of 53°). To prevent impact of stray light of another wavelength, a 0-degree filter plate may be selectively used for isolation.
(2) Optical signals corresponding to wavelengths of a G-PON (1300 nm to 1330 nm) and an XG(S)-PON (1260 nm to 1280 nm) are reflected to a third filter plate (namely, the third filter 3113, whose angle is consistent with that of the first filter plate) through the second filter plate. To ensure isolation of the wavelength of the 50G-PON, reflection needs to be performed once again. Light is reflected to a fourth filter plate (namely, the fourth filter 3114) through the third filter plate. A design of the fourth filter plate is consistent with that of the second filter plate, and the fourth filter plate is configured to transparently transmit the wavelength of the 50G-PON and reflect the wavelengths of the G-PON and the 10G-PON. Finally, light emergent in parallel is incident to the second optical receiver through a 45° second reflective mirror. Preferably, use of the 0-degree filter plate is reduced. Alternatively, to prevent impact of stray light of another wavelength, the 0-degree filter plate may be selectively used on a receiving optical path of the second optical receiver for isolation.

Each of the second filter plate, the first reflective mirror, the third filter plate, and the second reflective mirror may be replaced with an irregular-shaped prism.

FIG. 4 is a diagram of a structure of an optical module according to a third embodiment of this application. It may be understood that the optical module provided in the third embodiment and the optical module provided in the second embodiment have components with same functions. Details about this type of component are not described again. The following describes only components that are different from those in the second embodiment.

In this embodiment, the optical module includes a receiving optical sub-assembly 4100 and a transmitting optical sub-assembly 4200. A first collimating lens 4231, a second collimating lens 4232, and a third collimating lens 4233 are packaged in a second enclosure of the transmitting optical sub-assembly. The first collimating lens 4231 is disposed on an emission optical path of a first optical transmitter. The second collimating lens 4232 is disposed on an emission optical path of a second optical transmitter; and the third collimating lens 4233 is disposed on an emission optical path of a third optical transmitter.

The following provides a specific design solution of the transmitting optical sub-assembly corresponding to this embodiment.
(1) The three collimating lenses are used to collimate light emitted by the optical transmitters into parallel light for emission.
(2) After multiplexing is performed by a first multiplexer 4221, parallel light corresponding to a G-PON (1480 nm to 1500 nm) and a 10G-PON (1575 nm to 1580 nm) is incident to a second multiplexer through an isolator.
(3) Parallel light corresponding to a 50G-PON (1340 nm to 1344 nm) first passes through an isolator, and then is incident into the second multiplexer.
(4) Multiplexing is performed on two channels of parallel light in the second multiplexer, and the light is output through a same optical path.

It may be understood that a signal optical path output by the transmitting optical sub-assembly enters an optical fiber after being transparently transmitted by the first filter.

In another possible implementation method, the first multiplexer is further disposed on the emission optical path of the third optical transmitter, and the first multiplexer is specifically configured to guide a second multiplexed signal of the first optical transmitter, the second optical transmitter, and the third optical transmitter to a first egress optical port. It may be understood that the first multiplexer includes three incident ports, and may combine three signals for outputting.

The first multiplexer is further disposed on the emission optical path of the third optical transmitter, and the first multiplexer is specifically configured to guide, to the first egress optical port, the second multiplexed signal of the first optical transmitter, the second optical transmitter, and the third optical transmitter.

FIG. 5 is a diagram of a structure of an optical module according to a fourth embodiment of this application. It may be understood that the optical module provided in the fourth embodiment and the optical module provided in any one of the foregoing embodiments have components with same functions. Details about this type of component are not described again. The following describes only components that are different from those in the embodiment.

In this embodiment, the optical module includes a receiving optical sub-assembly 5100 and a transmitting optical sub-assembly 5200. A parallelogram transparent substrate 5105 is further packaged in a first enclosure of the receiving optical sub-assembly 5100, and a first filter 5111, a second filter 5112, and the transparent substrate 5105 form a z-block demultiplexer.

The following provides a specific design solution of the receiving optical sub-assembly corresponding to this embodiment.
(1) Optical fiber output light passes through a collimating lens to form parallel light and is incident to a small-angle (for example, 8°) z-block demultiplexer.
(2) Optical signals (1284 nm to 1288 nm, 1300 nm to 1330 nm, and 1260 nm to 1280 nm) that are incident from a first ingress optical port is totally reflected at a filter plate (namely, the first filter 5111) on a right side of the z-block. An optical signal corresponding to a 50G-PON (1284 nm to 1288 nm) is transparently transmitted at a 1^{st} filter plate (namely, the second filter 5112) on a left side and then is incident to a first optical receiver through a first reflective mirror. To prevent impact of stray light of another wavelength, a 0-degree filter plate may be used on a receiving optical path of the first optical receiver for isolation.
(3) After optical signals corresponding to a G-PON (1300 nm to 1330 nm) and an XG(S)G-PON (1260 nm to 1280 nm) are totally reflected at the 1^{st} filter plate on the left side of the z-block, the optical signals are further reflected twice. A design of a 2^{nd} filter plate (namely, a fourth filter 5114) on the left side of the z-block is the same as that of the 1^{st} filter plate on the left side, and reflection on the 2^{nd} filter plate on the left side is mainly to increase isolation of the 50G-PON.
(4) Emergent parallel light in a horizontal direction is incident to a second optical receiver through a second reflective mirror, and a dual-receiving design is used for the second optical receiver.

In a possible implementation method, a filter plate-attached (band-stop) design or a design in which a reflective film is directly coated on an end face may be used for a reflective surface of the z-block; and a filter plate-attached (band-pass) design or an antireflective film-plated design may be used for a transparent transmission surface.

In a possible implementation method, the reflective mirror may alternatively be a filter plate, a reflecting prism, or the like. The reflecting prism may be integrated with the filter plate of the z-block into a whole.

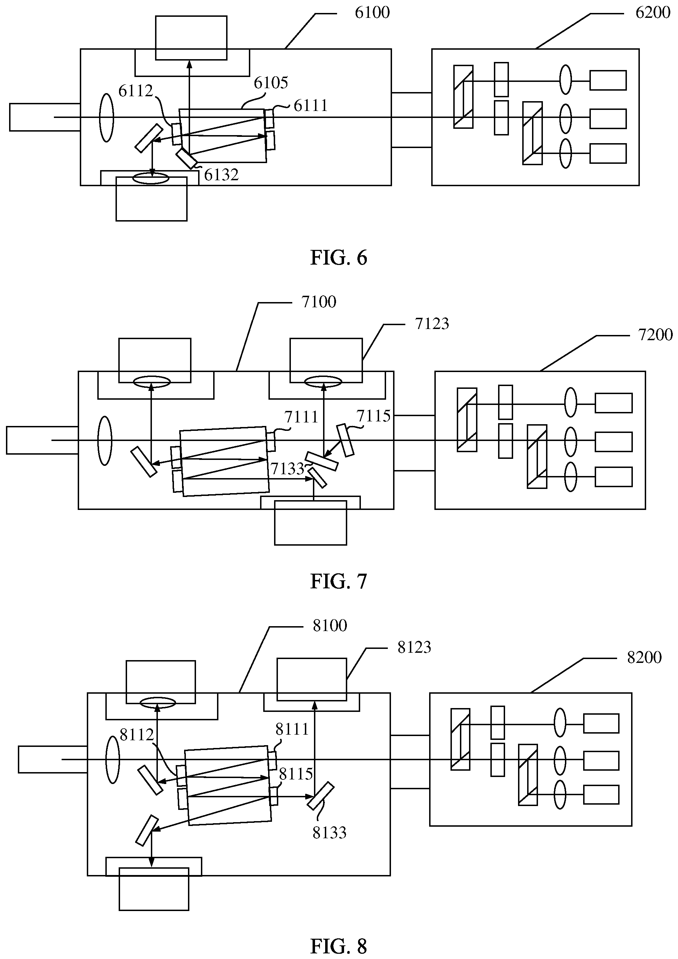

FIG. 6 is a diagram of a structure of an optical module according to a fifth embodiment of this application. It may be understood that the optical module provided in the fifth embodiment and the optical module provided in any one of the foregoing embodiments have components with same functions. Details about this type of component are not described again. The following describes only components that are different from those in the embodiment.

In this embodiment, the optical module includes a receiving optical sub-assembly 6100 and a transmitting optical sub-assembly 6200. An irregular-shaped prism 6105 is packaged in a first enclosure of the receiving optical sub-assembly 6100, and a first filter 6111 and a second filter 6112 are disposed on an edge of the irregular-shaped prism.

The following provides a specific design solution of the receiving optical sub-assembly corresponding to this embodiment.
(1) Optical fiber output light passes through a collimating lens to form parallel light and is incident to one edge of the small-angle (for example, 8°) irregular-shaped prism.
(2) Optical signals (1284 nm to 1288 nm, 1300 nm to 1330 nm, and 1260 nm to 1280 nm) that are incident from a first ingress optical port are totally reflected at a first filter plate (namely, the first filter 6111) on a right side of the irregular-shaped prism (or a non-filter plate may be used, and a total reflective film is plated on an edge of the irregular-shaped prism). An optical signal corresponding to a 50G-PON (1284 nm to 1288 nm) is transparently transmitted at a second filter plate (namely, the second filter 6112) on a left side of the irregular-shaped prism, and then is incident to a first optical receiver through a first reflective mirror (with an angle of 53°). To prevent impact of stray light of another wavelength, a 0-degree filter plate may be used on a receiving optical path of the first optical receiver for isolation.
(3) After being totally reflected on the second filter plate of the irregular-shaped prism, optical signals of a G-PON (1300 nm to 130 nm) and a 10G-PON (1260 nm to 1280 nm) continue to be totally reflected on a third filter plate (namely, a third filter) (the first filter plate and the third filter plate may be combined into one filter plate, or a total reflective film is selected to be plated on the edge of the irregular-shaped prism) to a second reflective mirror 6232 (for example, with an angle of 37°). Then, the optical signals are reflected from the second reflective mirror to a second optical receiver. To prevent impact of stray light of another wavelength, a 0-degree filter plate may also be used on a receiving optical path of the second optical receiver for isolation.

In a possible implementation method, a filter plate-attached (band-stop) design or a design in which a reflective film is directly coated on an end face may be used for a reflective surface of the irregular-shaped prism; and a filter plate-attached (band-pass) design or an anti-reflective film-plated design may be used for a transparent transmission surface.

In a possible implementation method, the irregular-shaped prism may be made of glass, resin, or the like.

In a possible implementation method, the first reflective mirror may be a filter plate, a reflecting prism, or the like. The reflecting prism may alternatively be integrated with the second filter plate into a whole.

When the receiving optical sub-assembly needs to receive optical signals in three wavelength ranges through different optical receivers, the following are two possible implementation methods provided in embodiments of this application.

I. FIG. 7 is a diagram of a structure of an optical module according to a sixth embodiment of this application. It may be understood that the optical module provided in the sixth embodiment and the optical module provided in any one of the foregoing embodiments have components with same functions. Details about this type of component are not described again. The following describes only components that are different from those in the embodiment.

In this embodiment, the optical module includes a receiving optical sub-assembly 7100 and a transmitting optical sub-assembly 7200. A third optical lens group and a third optical receiver 7123 are further packaged in a first enclosure of the receiving optical sub-assembly 7100.

A first filter 7111 is further configured to transparently transmit an optical signal in a third wavelength range in a first optical signal.

The third optical lens group is disposed on an optical path of the first optical signal that is transparently transmitted by the first filter 7111, and the third optical lens group is configured to guide the optical signal in the third wavelength range to the third optical receiver 7123.

The third optical lens group specifically includes a fifth filter 7115 and several optical reflectors, specifically including a third reflective mirror 7133. The fifth filter 7115 is configured to reflect the optical signal in the third wavelength range to the third reflective mirror 7133, and the third reflective mirror 7133 guides the optical signal in the third wavelength range to the third optical receiver 7123. It may be understood that the fifth filter 7115 is further located on an optical path of a second optical signal. Therefore, the fifth filter 7115 is further configured to transparently transmit the second optical signal.

In this embodiment, when demultiplexing is performed on an optical signal in a first wavelength range and an optical signal in a second wavelength range, demultiplexing is further performed on the optical signal in the third wavelength range in the first optical signal through the first filter 7111, and then the optical signal in the third wavelength range is guided to a corresponding optical receiver through the fifth filter 7115 and the third reflective mirror 7133, so that demultiplexing is performed on the optical signals in the three wavelength ranges and the optical signals are separately received. This may be applied to a scenario in which optical sub-assemblies of three generations of a G-PON, an XG-PON, and a 50G-PON coexist, so that a user may need to replace a user-side ONU terminal, and service selection is more flexible.

It may be understood that the third optical lens group and the third optical receiver in this embodiment may be disposed in any one of the receiving optical sub-assemblies in the first embodiment to the fifth embodiment. For example, the third optical lens group and the third optical receiver are disposed in the receiving optical sub-assembly provided in the fourth embodiment. The following provides a specific design solution of the receiving optical sub-assembly corresponding to this embodiment.
(1) Optical fiber output light passes through a collimating lens to form parallel light and is incident to a small-angle (for example, 8°) z-block. An optical signal corresponding to the G-PON (1300 nm to 1330 nm) is transparently transmitted from a 1^{st} filter plate (namely, the first filter 7111) on a right side of the z-block, and is incident to the third optical receiver 7123 through a small-angle filter plate (namely, the fifth filter, for example, with an angle of 32°) and a reflective mirror (namely, the third reflective mirror 7133, for example, with an angle of 13°).
(2) Optical signals corresponding to the 50G-PON (1284 nm to 1288 nm) and the XG(S)-PON (1260 nm to 1280 nm) are reflected in the z-block, and an optical signal corresponding to the 50G-PON is incident to a first optical receiver through a reflective mirror after being emergent from a first filter plate on a left side of the z-block.
(3) An optical signal corresponding to a 10G-PON (1260nm to 1280 nm) is reflected twice again in the z-block, and is emergent and incident to a second optical receiver through a reflective mirror.

In a possible implementation method, to reduce a width size, a 0-degree filter plate may be preferably removed; or to prevent impact of stray light of another wavelength, a 0-degree filter plate may be used on a receiving optical path of any optical receiver for isolation.

In a possible implementation method, a filter plate-attached (band-stop) design or a design in which a reflective film is directly coated on an end face may be used for a reflective surface of the z-block; and a filter plate-attached (band-pass) design or an anti-reflective film-plated design may be used for a transparent transmission surface.

In a possible implementation method, the reflective mirror may be a filter plate, a reflecting prism, or the like. The reflecting prism may alternatively be integrated with the filter plate of the z-block into a whole.

II. FIG. 8 is a diagram of a structure of an optical module according to a seventh embodiment of this application. It may be understood that the optical module provided in the seventh embodiment and the optical modules provided in the first embodiment to the fifth embodiment have components with same functions. Details about this type of component are not described again. The following describes only components that are different from those in the embodiments.

In this embodiment, the optical module includes a receiving optical sub-assembly 8100 and a transmitting optical sub-assembly 8200. A fifth filter 8115, a third optical lens group, and a third optical receiver 8123 are further packaged in a first enclosure of the receiving optical sub-assembly 8100.

The first filter 8111 is further configured to reflect an optical signal in a third wavelength range in a first optical signal to a second filter 8112. The second filter 8112 is further configured to reflect the optical signal in the third wavelength range. The fifth filter 8115 is disposed on an optical path between the second filter 8112 and a second optical lens group. The fifth filter 8115 is configured to transparently transmit the optical signal in the third wavelength range and reflect an optical signal in a second wavelength range to the second optical lens group. The third optical lens group is disposed on a transparent transmission optical path of the fifth filter 8115, and the third optical lens group is configured to guide transparently transmitted light of the fifth filter 8115 to the third optical receiver 8123.

It may be understood that, the first filter 8111 reflects, to the second filter 8112, the complete first optical signal (including optical signals in a first wavelength range, the second wavelength range, and the third wavelength range) from a first ingress optical port, and the second filter 8112 transparently transmits the optical signal in the first wavelength range, and reflects optical signals in the second wavelength range and the third wavelength range, to facilitate subsequent separate receiving of the optical signal in the first wavelength range. After being reflected by the second filter 8112, the optical signals in the second wavelength range and the third wavelength range may enter the fifth filter 8115 with or without reflection. The fifth filter 8115 is configured to transparently transmit the optical signal in the third wavelength range and reflect the optical signal in the second wavelength range, to facilitate subsequent separate receiving of the optical signal in the third wavelength range. The optical signal that is in the second wavelength range and that is reflected by the fifth filter 8115 enters a second optical lens group, to separately receive the optical signal in the second wavelength range.

The third optical lens group specifically includes several optical reflectors, specifically including a third reflective mirror 8133. The third reflective mirror 8133 is configured to guide the optical signal in the third wavelength range to the third optical receiver 8123.

In this embodiment, light in the first wavelength range and light in the third wavelength range are respectively split through the second filter and the fifth filter, and light in the second wavelength range is split, so that demultiplexing is performed on the optical signals in the three wavelength ranges and the optical signals are separately received. This may be applied to a scenario in which optical sub-assemblies of three generations of a G-PON, an XG-PON, and a 50G-PON coexist. A user may need to replace a user-side ONU terminal, and service selection is more flexible.

It may be understood that the third optical lens group and the third optical receiver in this embodiment may be disposed in any one of the receiving optical sub-assemblies in the first embodiment to the fifth embodiment. For example, the third optical lens group and the third optical receiver are disposed in the receiving optical sub-assembly provided in the fourth embodiment. The following provides a specific design solution of the receiving optical sub-assembly corresponding to this embodiment.
(1) Optical fiber output light passes through a collimating lens to form parallel light and is incident to a small-angle (for example, 8°) z-block demultiplexer.
(2) Optical signals (1284 nm to 1288 nm, 1300 nm to 1330 nm, and 1260 nm to 1280 nm) that are incident from the first ingress optical port is totally reflected at a 1^{st} filter plate (namely, the first filter 8111) on a right side of the z-block. An optical signal corresponding to the 50G-PON (1284 nm to 1288 nm) is transparently transmitted at a 1^{st} filter plate (namely, the second filter 8112) on a left side and then is incident to a first optical receiver through a reflective mirror. To prevent impact of stray light of another wavelength, a 0-degree filter plate may be used on a receiving optical path of the first optical receiver for isolation.
(3) After optical signals corresponding to a G-PON (1300 nm to 130 nm) and an XG(S)G-PON (1260 nm to 1280 nm) are totally reflected at the 1^{st} filter plate on the left side of the z-block, the optical signals are further reflected twice. A design of a 2^{nd} filter plate on the left side of the z-block is the same as that of the 1^{st} filter plate on the left side, and reflection on the 2^{nd} filter plate on the left side is mainly to increase isolation of the 50G-PON.
4) 10G-PON light is horizontally emergent from a 2^{nd} filter plate (namely, the fifth filter 8115) on the right side of the z-block, and the light is incident to the third optical receiver 8123 through a reflective mirror (namely, the third reflective mirror 8133).
(5) After being reflected by the 2^{nd} filter plate on the right side of the z-block, G-PON light is emergent from the left side of the z-block.

In a possible implementation method, a filter plate-attached (band-stop) design or a design in which a reflective film is directly coated on an end face may be used for a reflective surface of the z-block; and a filter plate-attached (band-pass) design or an anti-reflective film-plated design may be used for a transparent transmission surface.

In a possible implementation method, the reflective mirror may be a filter plate, a reflecting prism, or the like. The reflecting prism may alternatively be integrated with the filter plate of the z-block into a whole.

It may be understood that an optical module formed by arranging and combining any receiving optical sub-assembly and any transmitting optical sub-assembly in any one of the foregoing embodiments falls in the protection scope of this application.

This application further provides an optical line terminal, including the optical module in any one of the foregoing embodiments. It may be understood that the optical module is connected to a board and placed in a subrack to form the optical line terminal.

This application further provides a passive optical network system, including the foregoing optical line terminal, an optical distribution network, and a plurality of optical network units.

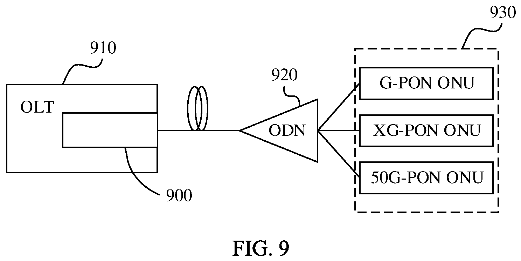

FIG. 9 is a diagram of a structure of a passive optical network system according to an embodiment of this application. The system includes:
an optical line terminal 910, where an optical module 900 is disposed in the optical line terminal 910;
an optical distribution network 920, where the optical distribution network is connected to the optical line terminal 910; and
a plurality of optical network units 930, where the plurality of optical network units 930 are connected to the optical distribution network 920.

In the plurality of optical network units 930, optical modules of some optical network units are G-PON optical modules, optical modules of some optical network units are XG-PON optical modules, and optical modules of remaining optical network units are 50G-PON optical modules.

According to the optical line terminal and the passive optical network system provided in embodiments of this application, the optical module 900 can implement upstream optical signal demultiplexing and receiving and downstream optical signal multiplexing and sending.

In descriptions of this specification, the specific features, structures, materials, or characteristics may be combined in a proper manner in any one or more of embodiments or examples.

The foregoing descriptions are merely specific implementations of the present invention, but are not intended to limit the protection scope of the present invention. Any variation or replacement readily figured out by a person skilled in the art in the technical scope disclosed in the present invention shall fall in the protection scope of the present invention. Therefore, the protection scope of the present invention shall be subject to the protection scope of the claims.

## Claims

1. A receiving optical sub-assembly, comprising a first enclosure, a first optical receiver, and a second optical receiver, wherein
a first ingress optical port and a second ingress optical port are disposed on the first enclosure;
and a first filter, a second filter, a first optical lens group, and a second optical lens group are packaged in the first enclosure, wherein
the first filter is disposed between the first ingress optical port and the second ingress optical port, the first filter is configured to reflect an optical signal in a first wavelength range and an optical signal in a second wavelength range in a first optical signal that is from the first ingress optical port, and the first filter is further configured to transparently transmit, to the first ingress optical port, a second optical signal that is from the second ingress optical port;
the second filter is disposed on a reflection optical path of the first filter, and the second filter is configured to transparently transmit the optical signal in the first wavelength range and reflect the optical signal in the second wavelength range;
the first optical lens group is disposed on a transparent transmission optical path of the second filter, and the first optical lens group is configured to guide transparently transmitted light of the second filter to the first optical receiver; and
the second optical lens group is disposed on a reflection optical path of the second filter, and the second optical lens group is configured to guide reflected light of the second filter to the second optical receiver.

2. The receiving optical sub-assembly according to claim 1, wherein
an incident angle of the first optical signal on the first filter is a preset angle, and the preset angle is determined based on a wavelength difference between a maximum wavelength of the first optical signal and a minimum wavelength of the second optical signal.

3. The receiving optical sub-assembly according to claim 1 or 2, wherein
the first optical lens group comprises at least one first optical reflector, the first optical reflector is disposed on the transparent transmission optical path of the second filter, and the transparently transmitted light of the second filter is sequentially reflected by each first optical reflector and then enters the first optical receiver.

4. The receiving optical sub-assembly according to claim 3, wherein
the first optical lens group further comprises a first filter plate, the first filter plate is disposed on a receiving optical path of the first optical receiver, and the first filter plate is configured to transparently transmit the optical signal in the first wavelength range.

5. The receiving optical sub-assembly according to any one of claims 1 to 4, wherein a third filter is further packaged in the first enclosure; and
the third filter is disposed on the reflection optical path of the second filter, and is configured to reflect the optical signal in the second wavelength range to the second optical lens group.

6. The receiving optical sub-assembly according to claim 5, wherein a disposition angle of the third filter is consistent with that of the first filter.

7. The receiving optical sub-assembly according to any one of claims 1 to 6, wherein
the second optical lens group comprises at least one second optical reflector, the second optical reflector is disposed on the reflection optical path of the second filter, and the reflected light of the second filter is sequentially reflected by each second optical reflector and then enters the second optical receiver.

8. The receiving optical sub-assembly according to claim 7, wherein
the at least one second optical reflector comprises a fourth filter, and the fourth filter is configured to transparently transmit the optical signal in the first wavelength range and reflect the optical signal in the second wavelength range.

9. The receiving optical sub-assembly according to any one of claims 1 to 8, wherein a third optical lens group and a third optical receiver are further packaged in the first enclosure;
the first filter is further configured to transparently transmit an optical signal in a third wavelength range in the first optical signal; and
the third optical lens group is disposed on an optical path of the first optical signal transparently transmitted by the first filter, and the third optical lens group is configured to guide the optical signal in the third wavelength range to the third optical receiver.

10. The receiving optical sub-assembly according to any one of claims 1 to 8, wherein a fifth filter, a third optical lens group, and a third optical receiver are further packaged in the first enclosure;
the first filter is further configured to reflect an optical signal in a third wavelength range in the first optical signal to the second filter;
the second filter is further configured to reflect the optical signal in the third wavelength range; the fifth filter is disposed on an optical path between the second filter and the second optical lens group, and the fifth filter is configured to transparently transmit the optical signal in the third wavelength range and reflect the optical signal in the second wavelength range to the second optical lens group; and
the third optical lens group is disposed on a transparent transmission optical path of the fifth filter, and the third optical lens group is configured to guide transparently transmitted light of the fifth filter to the third optical receiver.

11. The receiving optical sub-assembly according to any one of claims 1 to 10, wherein a parallelogram transparent substrate is further packaged in the first enclosure; and
the first filter, the second filter, and the transparent substrate form a z-block demultiplexer.

12. The receiving optical sub-assembly according to any one of claims 1 to 10, wherein an irregular-shaped prism is further packaged in the first enclosure; and
the first filter and the second filter are disposed on an edge of the irregular-shaped prism.

13. The receiving optical sub-assembly according to any one of claims 1 to 12, wherein the first wavelength range is 1284 nm to 1288 nm.

14. An optical module, comprising a transmitting optical sub-assembly and the receiving optical sub-assembly according to any one of claims 1 to 13, wherein
the transmitting optical sub-assembly comprises a second enclosure, a first egress optical port is disposed on the second enclosure, and the first egress optical port is connected to a second ingress optical port of the receiving optical sub-assembly.

15. The optical module according to claim 14, wherein a first optical transmitter, a second optical transmitter, and a first multiplexer are packaged in the second enclosure; and
the first multiplexer is disposed on an emission optical path of the first optical transmitter and an emission optical path of the second optical transmitter, and the first multiplexer is configured to guide, to the first egress optical port, a first multiplexed signal of signals emitted by the first optical transmitter and the second optical transmitter.

16. The optical module according to claim 15, wherein a third optical transmitter and a second multiplexer are further packaged in the second enclosure; and
the second multiplexer is disposed on an emission optical path of the first multiplexed signal and an emission optical path of the third optical transmitter, and the second multiplexer is configured to guide, to the first egress optical port, a second multiplexed signal of signals emitted by the first optical transmitter, the second optical transmitter, and the third optical transmitter.

17. The optical module according to claim 16, wherein a first collimating lens and a second collimating lens are further packaged in the second enclosure;
the first multiplexer is directly coupled to the first optical transmitter and the second optical transmitter by using a planar lightwave circuit technology; and
the first collimating lens is disposed on the emission optical path of the first multiplexed signal, and the second collimating lens is disposed on the emission optical path of the third optical transmitter.

18. The optical module according to claim 16, wherein a first collimating lens, a second collimating lens, and a third collimating lens are further packaged in the second enclosure;
the first collimating lens is disposed on the emission optical path of the first optical transmitter;
the second collimating lens is disposed on the emission optical path of the second optical transmitter; and
the third collimating lens is disposed on the emission optical path of the third optical transmitter.

19. The optical module according to claim 15, wherein a third optical transmitter is further packaged in the second enclosure; and
the first multiplexer is further disposed on an emission optical path of the third optical transmitter, and the first multiplexer is specifically configured to guide, to the first egress optical port, a second multiplexed signal of the first optical transmitter, the second optical transmitter, and the third optical transmitter.

20. An optical line terminal, comprising the optical module according to any one of claims 14 to 19.

21. A passive optical network system, comprising the optical line terminal according to claim 20, an optical distribution network, and a plurality of optical network units, wherein
the optical distribution network is connected to the optical line terminal; and the optical network units are connected to the optical distribution network.

22. The passive optical network system according to claim 21, wherein
the plurality of optical network units comprise a network unit corresponding to a G-PON optical module, a network unit corresponding to an XG-PON optical module, and a network unit corresponding to a 50G-PON optical module.
